# EUROPÄISCHE PATENTSCHRIFT

(11) **EP 0 546 334 B1**
(45) Veröffentlichungstag und Bekanntmachung des Hinweises auf die Patenterteilung: **10.01.1996**
(21) Anmeldenummer: 92119227.4
(22) Anmeldetag: 11.11.1992
(51) Int. Cl.: B23P 15/26, B21C 37/22, F28F 1/12, F28F 3/02

(54) **Verfahren und Vorrichtung zur Herstellung von Wärmetauscherelementen sowie zugehöriges Wärmetauscherelement**
Method and device for manufacturing of heat-exchanger elements, and corresponding heat-exchanger element
Procédé et dispositif pour fabriquer des élément, échangeurs de chaleur, et élément d'un échangeur de chaleur

(30) Priorität: 11.12.1991 DE 4140729
(43) Veröffentlichungstag der Anmeldung: 16.06.1993
(73) Patentinhaber: BDAG Balcke-Dürr Aktiengesellschaft, D-40882 Ratingen (DE)
(72) Erfinder: Podhorsky, Miroslav, Dr. Dipl.-Ing., W-4030 Ratingen 1 (DE); Schrey, Hans-Georg, Dipl.-Ing., W-4030 Ratingen 1 (DE); Blum, Jörg, Dr. Dipl.-Ing., W-4630 Bochum (DE); Holten, Wolfgang, Dipl.-Ing., W-4000 Düsseldorf 30 (DE)
(74) Vertreter: Stenger, Watzke & Ring Patentanwälte

(56) Entgegenhaltungen:
- EP-A- 0 490 210
- DE-A- 1 602 286
- FR-A- 1 295 142
- FR-A- 1 479 551
- FR-A- 2 079 269
- FR-A- 2 079 271

## Beschreibung

Die Erfindung betrifft gemäß dem Oberbegriff der Ansprüche 1, 5 und 11 ein Verfahren und eine Vorrichtung zur Herstellung von Wärmetauscherelementen mit einem rohrförmigen Grundkörper, dessen Querschnitt eine große Breite im Verhältnis zu seiner Höhe aufweist und der auf seiner Oberfläche mit die Wärmetaustauschfläche vergrößernden Rippen versehen ist, sowie ein entsprechendes Wärmetauscherelement. Ein solches Verfahren, Wärmetauscherelement, sowie eine solche Vorrichtung ist z.B aus FR-A-2079271 bekannt.

Um die Wärmeaustauschfläche an Wärmetauscherelementen mit einem rohrförmigen Grundkörper zu vergrößern, dessen Querschnitt eine große Breite im Verhältnis zu seiner Höhe aufweist, ist es aus DE-A 21 44 465 bekannt, auf einer Stanze hergestellte Rippenbleche in Längsrichtung auf das Grundkörperprofil aufzuschieben, weil bei einem Querschnitt des Grundkörperprofils mit einer sehr stark von der Breite abweichenden Höhe ein wendelförmiges Aufwickeln von Band zur Bildung von Rippen nicht möglich ist. Durch geeignete Maßnahmen läßt sich zwar Band auch auf ovale Rohre mit einem Breiten-Höhen-Verhältnis von bis zu drei aufwickeln; bei einem Breiten-Höhen-Verhältnis über drei wird es jedoch wegen der sich beim Aufwickeln des Bandes extrem ändernden Wickelradien erforderlich, anstelle aufgewickelter Rippen aufgeschobene Rippenbleche zu verwenden, obwohl hiermit ein höherer Herstellungsaufwand verbunden ist.

Aus der DE-A 21 05 070 war weiterhin ein Verfahren zur Herstellung von Wärmetauscherelementen mit einem rohrförmigen Grundkörper bekannt, bei dem der Grundkörper auf seiner Oberfläche mit die Wärmeaustauschfläche vergrößernden Rippen versehen wird, indem auf die gegenüberliegenden Seiten des Grundkörperprofils jeweils ein Rippenblech in Profillängsrichtung aufgebracht wird, das jeweils von einer Rolle abgezogen und vor dem Aufbringen durch eine Profiliereinrichtung gefaltet oder gewellt und nach Andrücken an die Oberfläche des Grundkörperprofils zumindest an einigen Anlagestellen mit dem Grundkörperprofil verbunden wird. Bei diesem bekannten Verfahren erfolgt der Transport des Grundprofils durch zwei von einem Motor angetriebene Förderrollen. Der sich hieraus ergebenden Fördergeschwindigkeit des Grundprofils muß sich die Zulaufgeschwindigkeit der beiden Metallstreifen anpassen. Zu diesem Zweck werden die Metallstreifen nicht nur im Rahmen der durch Zahnräder gebildeten Profiliereinrichtung durch einen Motor angetrieben, sondern auch durch weitere Motoren innerhalb der Vorrichtung. Das bekannte Verfahren erfordert somit eine Mehrzahl von Antrieben, die exakt aufeinander abgestimmt werden müssen, um ein einwandfreies Produkt zu erzeugen. Der Aufwand zur Herstellung und Aufbringung der die Wärmeaustauschfläche vergrößernden Rippenbleche ist somit beträchtlich.

Der Erfindung liegt die Aufgabe zugrunde, ein Wärmetauscherelement sowie ein Verfahren und eine Vorrichtung zu dessen Herstellung zu schaffen, wobei das Grundkörperprofil trotz eines extremen Breiten-Höhen-Verhältnisses auf einfache und preiswerte Weise mit die Wärmeaustauschfläche vergrößernden Rippen in einem kontinuierlichen Verfahren versehen werden kann.

Das erfindungsgemäße Verfahren löst diese Aufgabe mittels der Merkmale von Anspruch 1.

Das erfindungsgemäße Verfahren hat den Vorteil, daß nur ein einziger Antrieb erforderlich ist, der nicht nur das Grundkörperprofil in dessen Längsrichtung transportiert, sondern zugleich die zuvor profilierten Rippenbleche auf das Grundkörperprofil aufbringt und hierbei positioniert. Die jeweils von einer Blechrolle abgezogenen Rippenbleche, die beispielsweise eine Blechstärke von 0,3 mm haben können, werden kurz vor dem Aufbringen auf die Breitseiten des Grundkörperprofils durch Bildung von Falten und/oder Wellen profiliert und nach dem Andrücken an die Oberfläche der einander gegenüberliegenden Breitseiten des Grundkörperprofils mit diesem zumindest an einigen Anlagestellen verschweißt. Der Abstand und auch die Anzahl der Schweißstellen hängt von den erforderlichen Kräften ab, die das Rippenblech in Verbund mit dem Grundkörperprofil übertragen muß. Mit dem erfindungsgemäßen Verfahren lassen sich Wärmetauscherelemente auch mit einem extremen Verhältnis zwischen der Breite und der Höhe des Querschnittes schnell und kostengünstig berippen, wobei als Werkstoffe alle denkbaren Kombinationen von schweißbaren Werkstoffen in Frage kommen.

Bei einer bevorzugten Weiterbildung des erfindungsgemäßen Verfahrens erfolgt die Steuerung der zugleich eine Positionierung der profilierten Rippenbleche auf dem Grundkörperprofil bewirkenden Antriebsvorrichtung, der Schweißeinrichtung und der Profiliereinrichtungen für die Rippenbleche durch ein gemeinsames Steuergerät.

Gemäß weiteren Merkmalen der Erfindung können die Rippenbleche vor ihrem Aufbringen auf das Grundkörperprofil zumindest auf einem Teil ihrer Oberfläche mit Eindrückungen und/oder Ausstanzungen versehen werden. Eine derartige Strukturierung der Rippenbleche hat eine Verbesserung des Wärmeübergangs zwischen den Rippen und dem an den Rippen vorbeistreifenden Medium zur Folge. Die Größe, Anzahl und geometrische Form derartiger Eindrückungen und/oder Ausstanzungen werden auf die jeweiligen Verhältnisse abgestimmt.

Wenn die oder ein Teil der Ausstanzungen erfindungsgemäß als Schlitze im Bereich des später am Grundkörperprofil anliegenden Teils der Rippenbleche ausgebildet werden, erleichtern sie die Verformung der gefalteten oder gewellten Rippenbleche zwecks Anpassung an eine gewölbte Oberfläche des Grundkörperprofils, so daß auch im Querschnitt elliptische Grundkörper mit dem Verfahren der Erfindung mit Rippenblechen versehen werden können.

Die erfindungsgemäße Vorrichtung zur Herstellung von Wärmetauscherelementen nach dem erfindungsgemäßen Verfahren ist dadurch gekennzeichnet, daß an einer mit mindestens einer Längsführung für das Grundkörperprofil versehenen Grundplatte zwei Druckplatten angeordnet sind, an denen sowohl die Schweißeinrichtung als auch die Antriebsvorrichtung angeordnet ist.

Durch diese erfindungsgemäße Ausgestaltung ergibt sich eine konstruktiv einfache Vorrichtung, die erfindungsgemäß dadurch weitergebildet werden kann, daß die Druckplatten durch Federkräfte in Richtung auf das Grundkörperprofil belastet sind. Als Federn kommen mechanische Federn oder Druckmittelzylinder in Frage, wobei es vorteilhaft ist, die jeweilige Federkraft in Abhängigkeit von dem Material und der Ausbildung der profilierten Rippenbleche einstellen zu können.

Gemäß einem weiteren Merkmal der Erfindung ist die Antriebsvorrichtung durch mindestens ein Antriebsrollenpaar gebildet, dessen Antriebsrollen auf ihrem Umfang mit einem dem Profil der Rippenbleche entsprechenden Zahnungsprofil versehen sind und von denen mindestens eine Antriebsrolle durch einen Antriebsmotor antreibbar ist. Bei einer ungünstigen Geometrie des Profils der Rippenbleche können die Antriebsrollen durch Zahnstangen ersetzt werden, die auf geeignete Weise angetrieben werden. Durch diese erfindungsgemäße Ausgestaltung ergibt sich nicht nur ein konstruktiv einfacher und störungsfreier Antrieb für den Transport sowohl des Grundkörperprofils als auch der aufgebrachten Rippenbleche relativ zur Schweißeinrichtung, sondern zugleich eine exakte Positionierung der profilierten Rippenbleche auf dem Grundkörperprofil, so daß eine einfache Steuerung der Schweißeinrichtung möglich wird.

Diese Schweißeinrichtung umfaßt gemäß einem weiteren Merkmal der Erfindung mehrere, Schweißpunkte oder -striche erzeugende und von dem gemeinsamen Steuergerät gesteuerte Laserköpfe, wobei es sich vorzugsweise um die Köpfe eines YAG-Lasers handelt, die mit dem Grundgerät über Glasfaserkabel verbunden sind.

Bei einer bevorzugten Ausführungsform der erfindungsgemäßen Vorrichtung sind an jeder Druckplatte mehrere, im Abstand voneinander auf einer gemeinsamen Welle angeordnete Antriebsrollen gelagert und die Laserköpfe der Schweißeinrichtung zwischen den Antriebsrollen angeordnet.

Das erfindungsgemäße Wärmetauscherelement mit einem rohrförmigen Grundkörper, dessen Querschnitt eine große Breite im Verhältnis zu seiner Höhe aufweist und der auf seiner Oberfläche mit die Wärmeaustauschfläche vergrößernden Rippen versehen ist, ist schließlich dadurch gekennzeichnet, daß die Rippen durch gefaltete oder gewellte Rippenbleche gebildet sind, die auf die gegenüberliegenden Breitseiten des Grundkörperprofils in Profillängsrichtung aufgebracht und zumindest an einigen Anlagestellen mit dem Grundkörperprofil verschweißt sind, wobei die Breite der Rippenbleche kleiner als die Breite des Grundkörperprofils ist und auf den Breitseiten im Bereich der Längsränder des Grundkörperprofils unberippte Führungsflächen ausgebildet sind, an denen das Profil an mindestens einer Längsführung der Grundplatte der erfindungsgemäßen Vorrichtung anliegt. Aufgrund der voranstehend beschriebenen Ausgestaltung des Wärmetauscherelements kann somit die Längsführung der zugehörigen Vorrichtung besonders einfach und mit großer Führungsfläche ausgebildet werden.

Die Rippenbleche sind bei einer erfindungsgemäßen Weiterbildung des Wärmetauscherelements zumindest auf einem Teil ihrer Oberfläche mit Eindrückungen und/oder Ausstanzungen versehen, um einerseits den Wärmeübergang zu verbessern und andererseits die Anpassung der gefalteten oder gewellten Rippenbleche an eine gewölbte Oberfläche des Grundkörpers zu erleichtern.

Auf der Zeichnung sind ein Ausführungsbeispiel der erfindungsgemäßen Vorrichtung und mehrere Ausbildungen von auf dieser Vorrichtung hergestellten Wärmetauscherelementen dargestellt, und zwar zeigen:
- Fig. 1: eine perspektivische Darstellung einer Vorrichtung und eines ersten Ausführungsbeispiels eines Wärmetauscherelements,
- Fig. 2: einen Querschnitt durch ein zweites Ausführungsbeispiel eines Wärmetauscherelements,
- Fig. 3: einen der Fig. 2 entsprechenden Querschnitt einer dritten Ausführungsform und
- Fig. 4: einen weiteren Querschnitt durch ein Wärmetauscherelement.

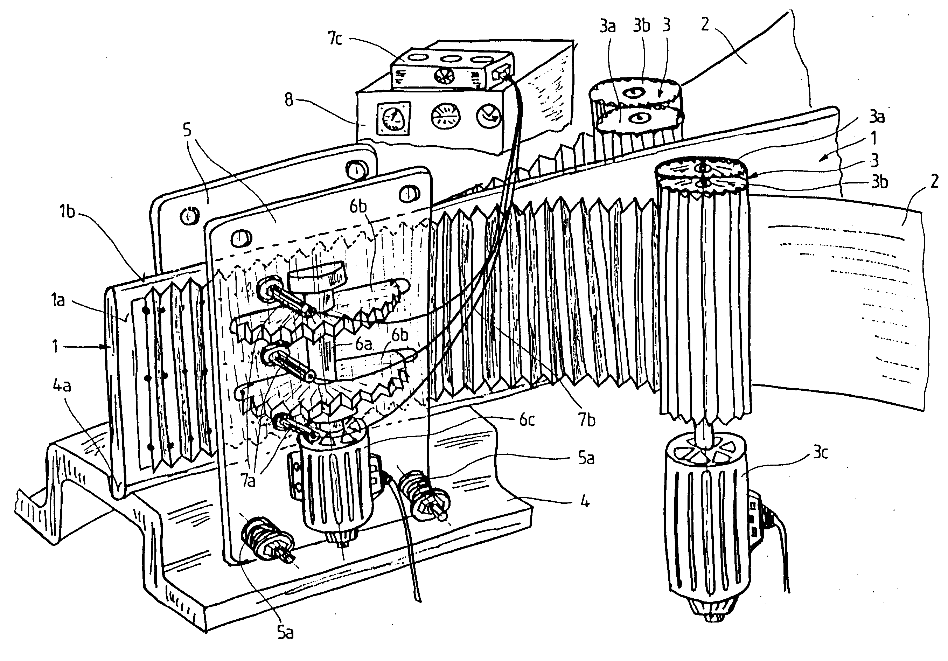

Wie Fig. 1 erkennen läßt, besteht das Wärmetauscherelement aus einem Grundkörperprofil 1, dessen Querschnitt im linken vorderen Teil der Zeichnung zu erkennen ist. Dieser Querschnitt weist eine große Breite im Verhältnis zu seiner Höhe auf. In der Praxis liegt die Höhe bei etwa 20 mm, die Breite zwischen 100 und 250 mm, so daß ein Breiten-Höhen-Verhältnis von 5 bis 12,5 vorliegt. Das vorzugsweise aus Stahl bestehende Grundkörperprofil 1 hat ebene Breitseiten 1a und ist beim Ausführungsbeispiel mit abgerundeten Längsrändern 1b ausgeführt.

Auf die einander gegenüberliegenden Breitseiten 1a des Grundkörperprofils 1 wird jeweils ein Rippenblech 2 aufgebracht, das von einer auf der Zeichnung nicht dargestellten Rolle abgezogen und jeweils in einer Profiliereinrichtung 3 gefaltet oder gewellt wird. Bei einer bevorzugten Ausführung haben die Rippenbleche 2 eine Stärke von 0,3 mm. Sie werden in der Profiliereinrichtung 3 derart gefaltet, daß Falten mit einer Höhe von 14 mm und einem Abstand von 6 mm entstehen. In einem derart profilierten Zustand werden die Rippenbleche 2 auf die Breitseiten 1a des Grundkörperprofils 1 aufgebracht und dort verschweißt. Auch die Rippenbleche 2 bestehen vorzugsweise aus Stahlblech, können aber auch aus Aluminium hergestellt sein, wie insgesamt alle denkbaren Materialpaarungen möglich sind, sofern es sich um verschweißbare Materialien handelt.

Bei dem in Fig. 1 dargestellten Ausführungsbeispiel besteht die Profiliereinrichtung 3 aus zwei Profilwalzen 3a,3b, die derart miteinander kämmen, daß sie das zwischen ihnen verlaufende Rippenblech 2 mit einem ihrer Formgebung entsprechenden Profil versehen und gleichzeitig von der nicht dargestellten Rolle abziehen. Zu diesem Zweck ist mindestens eine der paarweise angeordneten Profilwalzen 3a,3b von einem Motor 3c angetrieben der zur Einstellung der gewünschten Vorschubgeschwindigkeit des Grundkörperprofils 1 regelbar ist.

Das Grundkörperprofil 1 wird beim Ausführungsbeispiel hochkant stehend in einer Längsführung 4a einer Grundplatte 4 geführt. An der Grundplatte 4 sind zwei Druckplatten 5 angeordnet, mit deren Hilfe die auf die Breitseiten 1a des Grundkörperprofils 1 aufgebrachten, profilierten Rippenbleche 2 gegen die Oberfläche des Grundkörperprofils 1 angedrückt werden. Zu diesem Zweck sind die Druckplatten 5 durch Federkräfte in Richtung auf das Grundkörperprofil 1 belastet. Beim Ausführungsbeispiel sind zwei auf die Außenseite der Druckplatten 5 wirkende Wendelfedern 5a zu erkennen, deren Federkraft einstellbar ist. Das Andrücken der Rippenbleche 2 an das Grundkörperprofil 1 kann unmittelbar über die Druckplatten 5 oder mittelbar über Antriebsrollen 6b erfolgen.

An jeder Druckplatte 5 ist weiterhin eine Antriebsvorrichtung angeordnet, die beim Ausführungsbeispiel zwei auf einer gemeinsamen Welle 6a befestigte Antriebsrollen 6b umfaßt. Diese Antriebsrollen 6b sind auf ihrem Umfang mit einem dem Profil der Rippenbleche 2 entsprechenden Zahnungsprofil versehen, so daß sie in der Art eines Zahnrades in das als eine Art Zahnstange wirkende Profil der Rippenbleche 2 eingreifen, wenn die Welle 6a von einem Antriebsmotor 6c angetrieben wird. Die aus der Welle 6a, den Antriebsrollen 6b und dem Antriebsmotor 6c bestehende Antriebsvorrichtung bewirkt somit nicht nur eine Längsbewegung des mit den Rippenblechen 2 verschweißten Grundkörperprofils 1, sondern gleichzeitig eine exakte Positionierung der profilierten Rippenbleche 2 auf den Breitseiten 1a des Grundkörperprofils 1.

Durch diese exakte Positionierung der Rippenbleche 2 wird deren Verschweißen mit den Breitseiten 1a des Grundkörperprofils 1 erleichtert. Das Verschweißen geschieht beim Ausführungsbeispiel durch eine Schweißeinrichtung, die sechs Laserköpfe 7a umfaßt, von denen jeweils drei an einer Druckplatte 5 angeordnet sind, und zwar zwischen bzw. seitlich neben den Antriebsrollen 6b. Die Laserköpfe 7a stehen jeweils über ein Glasfaserkabel 7b mit einem YAG-Laser 7c in Verbindung. Die Laserköpfe 7a können zur Erzeugung von Schweißpunkten oder Schweißstrichen ausgelegt sein. Sie werden derart gesteuert, daß sie die profilierten Rippenbleche 2 jeweils an einigen der Anlagestellen mit den Breitseiten 1a des Grundkörperprofils 1 verschweißen, wozu es erforderlich ist, den Schweißvorgang in Abhängigkeit vom Profil der Rippenbleche 2 und deren Anordnung auf dem Grundkörperprofil 1 in Abhängigkeit von der Fördergeschwindigkeit zu steuern.

Um nicht nur die Motoren 3c der Profiliereinrichtung 3 und den Antriebsmotor 6c der Antriebsvorrichtung zu synchronisieren, sondern auch den YAG-Laser 7c in Abhängigkeit von der Längsgeschwindigkeit des erzeugten Wärmetauscherelements zu steuern, ist ein gemeinsames Steuergerät 8 vorgesehen. Die Verbindung der profilierten Rippenbleche 2 mit dem Grundkörperprofil 1 mit Hilfe der Laserköpfe 7a kann punktförmig oder linienförmig erfolgen. Die Anzahl der Verbindungsstellen wird entsprechend der jeweiligen Anforderung ausgewählt, vorzugsweise in Abhängigkeit von dem Verhältnis des im Inneren des Grundkörperprofils 1 des Wärmetauscherelements herrschenden Innendruckes zum Außendruck. Die auf die Breitseiten 1a des Grundkörperprofils 1 aufgebrachten Rippenbleche 2 haben nämlich nicht nur die Aufgabe, die Wärmeaustauschfläche zu vergrößern, sondern dienen auch der Verstärkung des in vielen Fällen nicht selbsttragendan Grundkörperprofils 1. Das fertige Wärmetauscherelement kann bei Bedarf insbesondere im Tauchverfahren verzinkt werden.

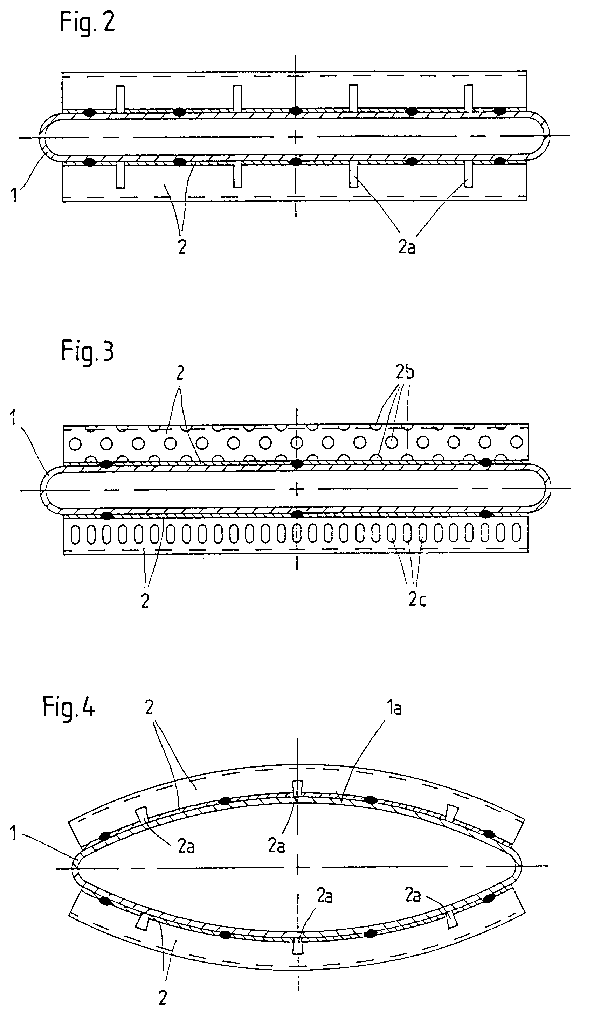

Die Fig. 2,3 und 4 zeigen weitere Ausführungsbeispiele von Wärmetauscherelementen. In Fig. 2 ist zu erkennen, daß die Rippenbleche 2 mit durch Ausstanzen erzeugten Schlitzen 2a versehen sind. Diese Schlitze 2a werden vor dem Falten oder Wellen in die Rippenbleche 2 eingebracht, und zwar auf der dem Grundkörperprofil zugewandten Seite über 1/3 bis 1/2 der Rippenblechhöhe. Das an der Rippe vorbeistreifende Medium hat hierdurch die Möglichkeit, aus einem Rippenkanal auszutreten und sich mit dem Medium im benachbarten Kanal zwecks Temperaturausgleichs und damit Verbesserung des Wärmeübergangs zu vermischen.

Beim Ausführungsbeispiel nach Fig. 3 sind die Rippenbleche mit einer gleichmäßigen Flächenstruktur aus Eindrückungen 2b bzw. 2c versehen. Die geometrische Form dieser Eindrückungen 2b kann gemäß der oberen Darstellung in Fig. 3 kreisförmig oder gemäß der unteren Darstellung elliptisch sein oder jede andere gewünschte Form haben. Auch eine Kombination mit Schlitzen 2a ist möglich, um den Wärmeübergang zu verbessern.

Das vierte Ausführungsbeispiel in Fig. 4 zeigt schließlich die Verwendung eines im Querschnitt elliptischen Grundkörperprofils 1. Hierbei erleichtern die Schlitze 2a, die im Bereich des später am Grundkörperprofil 1 anliegenden Teils der Rippenbleche 2 ausgebildet sind, die Anpassung der gewellten oder gefalteten Rippenbleche 2 an die gewölbten Breitseiten 1a des Grundkörperprofils 1, so daß nicht nur Profile mit ebenen Breitseiten 1a in der beschriebenen Weise mit Rippenblechen 2 versehen werden können.

### Bezugszeichenliste:

- 1: Grundkörperprofil
- 1a: Breitseite
- 1b: Längsrand
- 2: Rippenblech
- 2a: Schlitz
- 2b: Eindrückung
- 2c: Eindrückung
- 3: Profiliereinrichtung
- 3a: Profilwalze
- 3b: Profilwalze
- 3c: Motor
- 4: Grundplatte
- 4a: Längsführung
- 5: Druckplatte
- 5a: Wendelfeder
- 6a: Welle
- 6b: Antriebsrolle
- 6c: Antriebsmotor
- 7a: Laserkopf
- 7b: Glasfaserkabel
- 7c: YAG-Laser
- 8: Steuergerät

## Patentansprüche

1. Verfahren zur Herstellung von Wärmetauscherelementen mit einem rohrförmigen Grundkörper, dessen Querschnitt eine große Breite im Verhältnis zu seiner Höhe aufweist und der auf seiner Oberfläche mit die Wärmeaustauschfläche vergrößernden Rippen versehen wird, indem auf die gegenüberliegenden Seiten (1a) des Grundkörperprofils (1) jeweils ein Rippenblech (2) in Profillängsrichtung aufgebracht wird, das jeweils von einer Rolle abgezogen und vor dem Aufbringen durch eine Profiliereinrichtung (3) gefaltet oder gewellt und nach Andrücken an die Oberfläche des Grundkörperprofils (1) zumindest an einigen Anlagestellen mit dem Grundkörperprofil (1) verbunden wird,
**dadurch gekennzeichnet,**
daß das Grundkörperprofil (1) zusammen mit den Rippenblechen (2) in Längsrichtung des Grundkörperprofils (1) kontinuierlich durch eine in das Profil der aufgebrachten Rippenbleche (2) eingreifende Antriebsvorrichtung (6a, 6b, 6c), die zugleich eine Positionierung der profilierten Rippenbleche (2) auf dem Grundkörperprofil (1) bewirkt, relativ zu einer Schweißeinrichtung (7a, 7b, 7c) bewegt wird, wo die Rippenbleche (2) zumindest an einigen Anlagestellen mit dem Grundkörperprofil (1) verschweißt werden.

2. Verfahren nach Anspruch 1, dadurch gekennzeichnet, daß die Steuerung der Antriebsvorrichtung (6a,6b,6c), der Schweißeinrichtung (7a,7b,7c) und der Profiliereinrichtungen (3) für die Rippenbleche (2) durch ein gemeinsames Steuergerät (8) erfolgt.

3. Verfahren nach Anspruch 1 oder 2, dadurch gekennzeichnet, daß die Rippenbleche (2) vor ihrem Aufbringen auf das Grundkörperprofil (1) zumindest auf einem Teil ihrer Oberfläche mit Eindrückungen (2b,2c) und/oder Ausstanzungen (2a) versehen werden.

4. Verfahren nach Anspruch 3, dadurch gekennzeichnet, daß die Ausstanzungen als Schlitze (2a) im Bereich des später am Grundkörperprofil (1) anliegenden Teils der Rippenbleche (2) ausgebildet werden.

5. Vorrichtung zur Herstellung von Wärmetauscherelementen nach dem Verfahren nach wenigstens einem der Ansprüche 1-4, die eine die Rippenbleche faltende oder wellende Profiliereinrichtung (3), eine das Grundkörperprofil (1) zusammen mit den Rippenblechen (2) in Längsrichtung bewegende Antriebsvorrichtung (6a, 6b, 6c) und die an dem Grundkörperprofil (1) anliegenden Rippenbleche (2) zumindestens an einigen Anlagestellen mit dem Grundkörperprofil verbindende Schweißeinrichtung (7a) aufweist,
**dadurch gekennzeichnet,**
daß an einer mit mindestens einer Längsführung (4a) für das Grundkörperprofil (1) versehenen Grundplatte (4) zwei Druckplatten (5) angeordnet sind, an denen sowohl die Schweißeinrichtung (7a) als auch die Antriebsvorrichtung (6a, 6b, 6c) angeordnet ist.

6. Vorrichtung nach Anspruch 5, dadurch gekennzeichnet, daß die Druckplatten (5) durch Federkräfte in Richtung auf das Grundkörperprofil (1) belastet sind.

7. Vorrichtung nach Anspruch 5 oder 6, dadurch gekennzeichnet, daß die Antriebsvorrichtung durch mindestens ein Antriebsrollenpaar gebildet ist, dessen Antriebsrollen (6b) auf ihrem Umfang mit einem dem Profil der Rippenbleche (2) entsprechenden Zahnungsprofil versehen sind und von denen mindestens eine Antriebsrolle (6b) durch einen Antriebsmotor (6c) antreibbar ist.

8. Vorrichtung nach Anspruch 5 oder 6, dadurch gekennzeichnet, daß die Antriebsvorrichtung durch Zahnstangen mit einem dem Profil der Rippenbleche (2) entsprechenden Zahnungsprofil gebildet ist, die in geeigneter Weise antreibbar sind.

9. Vorrichtung nach Anspruch 5, dadurch gekennzeichnet, daß die Schweißeinrichtung mehrere, Schweißpunkte oder -striche erzeugende und von dem gemeinsamen Steuergerät (8) gesteuerte Laserköpfe (7a) umfaßt.

10. Vorrichtung nach mindestens einem der Ansprüche 5 bis 9, dadurch gekennzeichnet, daß an jeder Druckplatte (5) mehrere, im Abstand voneinander auf einer gemeinsamen Welle (6a) angeordnete Antriebsrollen (6b) gelagert sind und daß die Laserköpfe (7a) der Schweißeinrichtung zwischen bzw. neben den Antriebsrollen (6b) angeordnet sind.

11. Wärmetauscherelement, hergestellt nach dem Verfahren nach wenigstens einem der Ansprüche 1-4 mit einem rohrförmigen Grundkörper, dessen Querschnitt eine große Breite im Verhältnis zu seiner Höhe aufweist und der auf seiner Oberfläche mit die Wärmeaustauschfläche vergrößernden Rippen versehen ist,
**dadurch gekennzeichnet,**
daß die Rippen durch gefaltete oder gewellte Rippenbleche (2) gebildet sind, die auf die gegenüberliegenden Breitseiten (1a) des Grundkörperprofils (1) in Profillängsrichtung aufgebracht und zumindest an einigen Anlagestellen mit dem Grundkörperprofil (1) verschweißt sind, wobei die Breite der Rippenbleche (2) kleiner als die Breite des Grundkörperprofils (1) ist und auf den Breitseiten im Bereich der Längsränder (1b) des Grundkörperprofils (1) unberippte Führungsflächen ausgebildet sind.

12. Wärmetauscherelement nach Anspruch 11, dadurch gekennzeichnet, daß die Rippenbleche (2) zumindest auf einem Teil ihrer Oberfläche mit Eindrückungen (2b,2c) und/oder Ausstanzungen (2a) versehen sind.

## Claims

1. Process for the production of heat-exchanger elements having a tubular basic body, the cross-section of which has a large width in relation to its height and which is provided on its surface with ribs enlarging the heat-exchange area, in that a ribbed plate (2) is applied to each of the opposite sides (1a) of the basic-body profile (1) in the longitudinal direction of the profile, which ribbed plate (2) is in each case drawn off from a roll and, before being applied, is folded or corrugated by a profiling device (3) and, after being pressed onto the surface of the basic-body profile (1), is connected to the basic-body profile (1) at least at a few bearing points, characterized in that the basic-body profile (1), together with the ribbed plates (2), is continuously moved in the longitudinal direction of the profile by a drive device (6a, 6b, 6c), engaging into the profile of the applied ribbed plates (2) and at the same time causing a positioning of the profiled ribbed plates (2) on the basic-body profile (1), in relation to a welding device (7a, 7b, 7c), where the ribbed plates (2) are welded to the basic-body profile (1) at least at a few bearing points.

2. Process according to Claim 1, characterized in that the control of the drive device (6a, 6b, 6c), of the welding device (7a, 7b, 7c) and of the profiling devices (3) for the ribbed plates (2) takes place by means of a common control unit (8).

3. Process according to Claim 1 or 3, characterized in that the ribbed plates (2), before being applied to the basic-body profile (1), are provided, at least on part of their surface, with indentations (2b, 2c) and/or punched-out portions (2a).

4. Process according to Claim 3, characterized in that the punched-out portions are designed as slots (2a) in the region of the part of the ribbed plates (2) which subsequently bears on the basic-body profile (1).

5. Apparatus for the production of heat-exchanger elements by the process according to at least one of Claims 1 to 4, which has a profiling device (3) folding or corrugating the ribbed plates, a drive device (6a, 6b, 6c) moving the basic-body profile (1), together with the ribbed plates (2), in the longitudinal direction, and the welding device (7a) which connects ribbed plates (2) bearing on the basic-body profile (1) to the basic-body profile at least at a few bearing points, characterized in that two pressure plates (5), on which both the welding device (7a) and the drive device (6a, 6b, 6c) are located, are arranged on a base plate (4) provided with at least one longitudinal guide (4a) for the basic-body profile (1).

6. Apparatus according to Claim 5, characterized in that the pressure plates (5) are loaded by spring forces in the direction of the basic-body profile (1).

7. Apparatus according to Claim 5 or 6, characterized in that the drive device is formed by at least one pair of drive rollers, of which the drive rollers (6b) are provided on their circumference with a toothing profile corresponding to the profile of the ribbed plates (2) and of which at least one drive roller (6b) can be driven by a drive motor (6c).

8. Apparatus according to Claim 5 or 6, characterized in that the drive device is formed by racks which have a toothing profile corresponding to the profile of the ribbed plates (2) and which can be driven in a suitable way.

9. Apparatus according to Claim 5, characterized in that the welding device comprises a plurality of laser heads (7a) generating welding spots or welding lines and controlled by the common control unit (8).

10. Apparatus according to at least one of Claims 5 to 9, characterized in that a plurality of drive rollers (6b) arranged at a distance from one another on a common shaft (6a) are mounted on each pressure plate (5), and in that the laser heads (7a) of the welding device are arranged between or next to the drive rollers (6b).

11. Heat-exchanger element produced by the process according to at least one of Claims 1 to 4, having a tubular basic body, the cross-section of which has a large width in relation to its height and which is provided on its surface with ribs enlarging the heat-exchange area, characterized in that the ribs are formed by folded or corrugated ribbed plates (2) which are applied to the opposite wide sides (1a) of the basic-body profile (1) in the longitudinal direction of the profile and which are welded to the basic-body profile (1) at least at a few bearing points, the width of the ribbed plates (2) being smaller than the width of the basic-body profile (1), and non-ribbed guide faces being formed on the wide sides in the region of the longitudinal edges (1b) of the basic-body profile (1).

12. Heat-exchanger element according to Claim 11, characterized in that the ribbed plates (2) are provided, at least on part of their surface, with indentations (2b, 2c), and/or punched-out portions (2a).

## Revendications

1. Procédé pour fabriquer des éléments échangeurs de chaleur comprenant un corps de base tubulaire dont la section présente une grande largeur par rapport à la hauteur et dont la surface est munie de nervures agrandissant la surface d'échange thermique, ledit procédé consistant à appliquer, sur chacune des faces opposées (1a) du profit (1) du corps de base, dans la direction longitudinale du profit, une tôle nervurée (2) qui est dévidée d'une bobine et qui, avant d'être mise en place, est plissée ou ondulée par un dispositif de profilage (3) et, après avoir été appliquée contre la surface du profil (1) du corps de base, y est reliée au moins en quelques points de contact, caractérisé en ce qu'un dispositif d'entraînement (6a, 6b, 6c) qui s'engrène dans le profit des tôles nervurées appliquées (2) et qui positionne simultanément les tôles nervurées profilées (2) sur le profit (1) du corps de base déplace le profit (1) du corps de base, associé aux tôles nervurées (2), en continu dans sa direction longitudinale par rapport à un dispositif de soudage (7a, 7b, 7c), dans lequel les tôles nervurées (2) sont soudées au profit (1) du corps de base au moins en quelques points de contact.

2. Procédé selon la revendication 1, caractérisé en ce que la commande du dispositif d'entraînement (6a, 6b, 6c), du dispositif de soudage (7a, 7b, 7c) et des dispositifs (3) de profilage des tôles nervurées (2) est assurée par un appareil de commande commun (8).

3. Procédé selon la revendication 1 ou 2, caractérisé en ce que, préalablement à leur pose sur le profil (1) du corps de base, les tôles nervurées (2) sont pourvues d'empreintes (2b, 2c) et/ou de découpes (2a) au moins sur une partie de leur surface.

4. Procédé selon la revendication 3, caractérisé en ce que les découpes sont réalisées sous forme de fentes (2a) dans la zone de la partie des tôles nervurées (2) destinée à être appliquée ultérieurement contre le profil (1) du corps de base.

5. Dispositif de fabrication d'éléments échangeurs de chaleur selon le procédé conforme à au moins une des revendications 1 à 4, comprenant un dispositif de profilage (3) qui plisse ou ondule tes tôles nervurées, un dispositif d'entraînement (6a, 6b, 6c) qui déplace le profil (1) du corps de base conjointement avec tes tôles nervurées (2) dans ta direction longitudinale, et un dispositif de soudage (7a) qui relie au moins en quelques points de contact les tôles nervurées (2) appliquées contre le profit (1) du corps de base au profit du corps de base, caractérisé en ce que, sur un socle (4) pourvu d'au moins un dispositif de guidage longitudinal (4a) pour le profil (1) du corps de base, sont disposées deux plaques de pression (5), sur lesquelles sont montés aussi bien le dispositif de soudage (7a) que le dispositif d'entraînement (6a, 6b, 6c).

6. Dispositif selon la revendication 5, caractérisé en ce que les plaques de pression (5) sont sollicitées par des forces élastiques en direction du profit (1) du corps de base.

7. Dispositif selon la revendication 5 ou 6, caractérisé en ce que le dispositif d'entraînement est formé par au moins une paire de galets d'entraînement, dont les galets d'entraînement (6b) comportent, sur leur pourtour, un profit de denture correspondant au profit des tôles nervurées (2) et dont au moins un galet d'entraînement (6b) peut être entraîné par un moteur d'entraînement (6c).

8. Dispositif selon la revendication 5 ou 6, caractérisé en ce que te dispositif d'entraînement est formé par des crémaillères qui possède un profit de denture correspondant au profit des tôles nervurées (2) et qui peuvent être entraînées de manière appropriée.

9. Dispositif selon la revendication 5, caractérisé en ce que le dispositif de soudage comprend plusieurs têtes à taser (7a) qui réalisent des points ou des cordons de soudage et qui sont commandées par l'appareil de commande commun (8).

10. Dispositif selon l'une au moins des revendications 5 à 9, caractérisé en ce que sur chaque plaque de pression (5) sont disposés plusieurs galets d'entraînement (6b) montés sur un arbre commun (6a) et espacés les uns des autres et en ce que les têtes taser (7a) du dispositif de soudage sont disposés entre et de préférence près des galets d'entraînement (6b).

11. Elément échangeur de chaleur réalisé selon le procédé conforme à au moins l'une des revendications 1 à 4, comportant un corps de base tubulaire dont la section présente une largeur relativement grande à sa hauteur et qui comporte sur sa surface des nervures grandissant la surface d'échange thermique, caractérisé en ce que les nervures (2) sont constituées par une tôle de nervurage à plis ou ondulée, qui est appliquée sur tes côtés de la largeur (1a) du profil du corps de base et qui est soudée au moins en quelques points de contact avec te profit du corps de base (1), de sorte que la largeur de la tôle de nervurage (2) est plus petite que ta largeur du profit du corps de base (1) et que sur tes côtés de ta largeur dans ta zone des bords longitudinaux (1b) du profit du corps de base (1) sont réalisées des surfaces de guidage non nervurées.

12. Elément échangeur de chaleur conforme à la revendication 11, caractérisé en ce que ta tôle de nervurage (2) comporte au moins sur une partie de sa surface des renfoncements (2b, 2c) et/ou des fentes (2a).
